# EUROPÄISCHE PATENTSCHRIFT

(11) **EP 2 818 376 B1**
(45) Veröffentlichungstag und Bekanntmachung des Hinweises auf die Patenterteilung: **30.10.2019**
(21) Anmeldenummer: 14171923.7
(22) Anmeldetag: 11.06.2014
(51) Int. Cl.: G01S 13/86, G08G 1/16, B60W 30/08, G01S 13/93

(54) **Kraftfahrzeug mit einer Detektionseinrichtung für andere Verkehrsteilnehmer**
Motor vehicle with a device for detecting other road users
Véhicule automobile doté d'un dispositif de détection pour d'autres utilisateurs du réseau routier

(30) Priorität: 18.06.2013 DE 102013010235
(43) Veröffentlichungstag der Anmeldung: 31.12.2014
(73) Patentinhaber: Volkswagen Aktiengesellschaft, 38440 Wolfsburg (DE)
(72) Erfinder: Max, Dr. Stephan, 38518 Gifhorn (DE); Katzwinkel, Reiner, 38527 Meine (DE); Kirchner, Dr. Alexander, 38104 Braunschweig (DE)

(56) Entgegenhaltungen:
- DE-A1- 10 125 426
- DE-A1-102006 007 173
- DE-A1-102011 104 740

## Beschreibung

Die Erfindung betrifft ein Kraftfahrzeug mit zwei Überwachungseinrichtungen, von denen die erste anhand eines Signals eines Radarsensors herannahenden Querverkehr erkennt. Die zweite Überwachungseinrichtung ist zur Überwachung eines Totwinkelbereichs des Kraftfahrzeugs ausgelegt. Diesen Totwinkelbereich kann der Fahrer mittels seines Seitenspiegels nicht einsehen, so dass er Verkehrsobjekte, wie beispielsweise ein Fahrrad oder ein Fahrzeug auf einer Nachbarfahrspur, nicht erkennen kann.

Ein Kraftfahrzeug der genannten Art ist beispielsweise aus der DE 10 2006 007 173 A1 bekannt. Danach nutzt die erste Überwachungseinrichtung zum Erkennen von herannahendem Querverkehr einen Front-Radarsensor, welcher in einer Front des Kraftfahrzeugs integriert ist. Weiter sind eine frontseitige Überwachung von Kreuzungsverkehr wie auch eine Überwachung eines toten Winkels mittels Radarsensoren gezeigt. Durch Verschwenken eines Erfassungsbereichs, wie er allgemein durch eine für die Erfassung wirksame Radarkeule definiert sein kann, wird eine vor dem Kraftfahrzeug befindliche Umgebung nach darin befindlichen Verkehrsteilnehmern abgetastet. Für die zweite Überwachungseinrichtung, diejenige für Totwinkelbereiche der Seitenspiegel, weist das Fahrzeug auf jeder Fahrzeugseite einen weiteren Radarsensor am Heck des Kraftfahrzeugs auf, mit denen durch Verschwenken ihrer Radarkeulen über den Totwinkelbereich hinweg nach einem darin befindlichen Verkehrsobjekt abgetastet wird. Das Umschalten oder Verschwenken der Erfassungsbereiche sowie das Auswerten der Signale aller drei Radarsensoren erfordert eine entsprechend leistungsstarke und damit in der Bereitstellung teure Hardware.

Aus der DE 198 45 568 A1 ist hierzu eine Objekterfassung für ein Kraftfahrzeug bekannt, welche eine Vielzahl von Abstands-Sensoren aufweist, bei welchen wahlweise durch eine Auswerteeinheit eine Reichweite oder Messwiederholfrequenz oder Auflösung verändert wird, um so den Berechnungsaufwand zum Auswerten der Sensorsignale möglichst gering zu halten und an die aktuelle Verkehrssituation anzupassen. Für eine Erkennung von Querverkehr und eine Überwachung eines Totwinkelbereichs sind auch bei diesem Kraftfahrzeug insgesamt drei der Abstands-Sensoren vorgesehen.

DE 10 2011 104 740 A1 offenbart eine Vorrichtung zur Totwinkel-Überwachung für ein Fahrzeug, bei welchem im Heckbereich eines Fahrzeugs angeordnete Radarsensoren in Verbindung mit Ultraschallsensoren zur Totwinkel-Überwachung vorgesehen sind. Bei rückwärtigen Ausparkvorgängen können im Falle herannahender Verkehrsobjekte Warnungen an den Fahrer des Fahrzeugs ausgegeben werden, um Kollisionen zu vermeiden.

DE 101 25 426 A1 offenbart ein Warnsystem für ein Fahrzeug mit einem ersten Abstandssensor zur Erfassung eines Bereichs, wobei der Bereich zumindest teilweise innerhalb eines toten Winkels liegt.

Der Erfindung liegt die Aufgabe zugrunde, zum Erkennen von seitlich vom Kraftfahrzeug befindlichen Verkehrsteilnehmern eine Detektionseinrichtung bereitzustellen, die mit geringem Geräteaufwand realisiert werden kann.

Die Aufgabe wird durch ein Kraftfahrzeug gemäß Patentanspruch 1 sowie ein Verfahren gemäß Patentanspruch 8 gelöst. Vorteilhafte Weiterbildungen der Erfindung sind durch die Unteransprüche gegeben.

Bei dem erfindungsgemäßen Kraftfahrzeug erfolgt die Detektion radarbasiert, das heißt für die Erkennung des Querverkehrs ist in dem Kraftfahrzeug ein Radarmodul bereitgestellt, dessen Erfassungsbereich in Richtung zu einem möglichen Querverkehr hin ausgerichtet ist. Unter einem Radarmodul wird hier eine Einheit aus Radarquelle und Radarsensor verstanden. Bei dem erfindungsgemäßen Kraftfahrzeug ist des Weiteren eine erste Überwachungseinrichtung, beispielsweise ein Programmmodul einer zentralen Recheneinrichtung des Kraftfahrzeugs, mit dem Radarsensor des Radarmoduls gekoppelt. Die erste Überwachungseinrichtung ist dazu ausgelegt, auf der Grundlage eines Signals des Radarsensors herannahenden Querverkehr zu erkennen. Sie bildet also einen Querassistenten. Die hierzu nötige Auswertung des Signals kann dabei in einer aus dem Stand der Technik bekannten Weise erfolgen.

Bei dem erfindungsgemäßen Kraftfahrzeug ist auch eine Überwachung eines Totwinkelbereichs bereitgestellt, also desjenigen Bereichs, welcher für den Fahrer mittels seines Seitenspiegels uneinsehbar ist. Eine zweite Überwachungseinrichtung ist dazu ausgelegt zu detektieren, ob in dem Totwinkelbereich ein Verkehrsobjekt vorhanden ist. Um diese doppelte Überwachung, also sowohl die des Querverkehrs als auch die des Totwinkelbereichs, mit geringem Schaltungsaufwand zu ermöglichen, ist bei dem erfindungsgemäßen Kraftfahrzeug nun vorgesehen, dass auch die zweite Überwachungseinrichtung mit dem Radarsensor gekoppelt ist und dazu ausgelegt ist, das Verkehrsobjekt in dem Totwinkelbereich ebenfalls auf der Grundlage des Signals des Radarsensors zu detektieren. Es wird also ein und derselbe Radarsensor zur Bereitstellung zweier Funktionen in dem Kraftfahrzeug benutzt. Um dies zu ermöglichen, ist bei dem erfindungsgemäßen Kraftfahrzeug das Radarmodul derart zu einem Fahrzeugheck des Kraftfahrzeugs hin verdreht angeordnet, dass der Erfassungsbereich des Radarmoduls den Totwinkelbereich mit umfasst. Die zweite Überwachungseinrichtung kann hierbei beispielsweise ebenfalls durch ein Steuergerät oder ein Programmmodul bereitgestellt sein. Insbesondere können die erste und die zweite Überwachungseinrichtung durch jeweilige Programmmodule bereitgestellt sein, die durch dieselbe Recheneinrichtung, insbesondere dasselbe Gerät, ausgeführt werden. Das ebenfalls zur Erfindung gehörige Verfahren ergibt sich durch den Betrieb des erfindungsgemäßen Kraftfahrzeugs. Es werden dann andere Verkehrsteilnehmer, die sich seitlich des Kraftfahrzeugs befinden, detektiert. Durch das Radarmodul, genauer gesagt seine Radarquelle, wird ein Radarsignal in eine erste Richtung zu einem möglichen Querverkehr hin abgestrahlt und dann das Radarsignal, falls tatsächlich Querverkehr vorhanden ist und das Radarsignal an diesem reflektiert worden ist, wieder durch den Radarsensor des Radarmoduls empfangen. Das empfangene Radarsignal wird dann durch die erste Überwachungseinrichtung des Kraftfahrzeugs bezüglich herannahenden Querverkehrs ausgewertet. Wie bereits ausgeführt, ist das Radarmodul derart in dem Kraftfahrzeug angeordnet, dass durch die Radarquelle zusätzlich ein Radarsignal in den Totwinkelbereich des Kraftfahrzeugs abgestrahlt wird und entsprechend durch den Radarsensor auch das zusätzliche Radarsignal für den Fall, dass in dem Totwinkelbereich ein Verkehrsobjekt das Radarsignal reflektiert, dieses reflektierte Radarsignal durch den Radarsensor empfangen wird. Entsprechend ist es nun ermöglicht, den Totwinkelbereich durch die zweite Überwachungseinrichtung auf Grundlage dieses zusätzlichen Radarsignals zu überwachen. Das verwendete Radarmodul ist ein Front-Eck-Radar, welches seitlich im Kraftfahrzeug in einem äußeren Ende eines vorderen Stoßfängers des Kraftfahrzeugs integriert ist. Dies bietet den Vorteil, dass der Radarsensor an einer äußeren Fahrzeugecke angeordnet und durch eine metallfreie Abdeckung abgeschirmt ist, nämlich den für die Herstellung von Stoßfängern verwendeten Kunststoff. Hierdurch ist eine Dämpfung des Radarsignals beim Aus- und Wiedereintritt durch die Abdeckung besonders gering. Alternativ kann das Radarmodul in dem Seitenspiegel integriert sein. Hierdurch lässt sich der Erfassungsbereich des Radarmoduls bezüglich des Totwinkelbereichs besonders günstig anordnen.

Die Erfindung weist den Vorteil auf, dass sowohl eine Erkennung herannahenden Querverkehrs als auch eine Überwachung des Totwinkelbereichs bereitgestellt ist und hierfür pro Fahrzeugseite nur ein einziges, entsprechend zum Heck des Kraftfahrzeugs hin verdreht angeordnetes Radarmodul benötigt wird. Dies macht das erfindungsgemäße Kraftfahrzeug in der Herstellung günstig. Das erfindungsgemäße Kraftfahrzeug ist bevorzugt als Kraftwagen, insbesondere als Personenkraftwagen, ausgestaltet.

Bei dem erfindungsgemäßen Kraftfahrzeug finden natürlich die Erkennung von herannahendem Querverkehr und die Überwachung des Totwinkelbereichs bevorzugt sowohl auf der Fahrerseite als auch der Beifahrerseite des Kraftfahrzeugs statt. Im Folgenden ist lediglich zur Vereinfachung der Beschreibung der Erfindung nur die Ausgestaltung des erfindungsgemäßen Kraftfahrzeugs bezüglich einer Fahrzeugseite beschrieben, also beispielsweise die Fahrerseite des Kraftfahrzeugs. Dieselben Ausführungen gelten natürlich auch für die gegenüberliegende Beifahrerseite, an welcher dann entsprechend ein weiteres Radarmodul derselben Art angeordnet ist und dessen Radarsensor ebenfalls sowohl mit der ersten als auch mit der zweiten Überwachungseinrichtung gekoppelt ist. Diese erkennen und signalisieren dann entsprechend für beide Fahrzeugseiten herannahenden Querverkehr beziehungsweise ein in einem der beiden Totwinkelbereiche befindliches Verkehrsobjekt. Die erste und/oder die zweite Überwachungseinrichtung können hierbei jeweils auch in der Weise mehrteilig ausgestaltet sein, dass die Fahrerseite und die Beifahrerseite unabhängig voneinander von unterschiedlichen Teilen der Überwachungseinrichtungen überwacht werden.

Bei dem erfindungsgemäßen Kraftfahrzeug kann das Radarmodul hinter einer metallfreien Abdeckung angeordnet sein.

Bei der erfindungsgemäßen doppelten Nutzung des Radarmoduls muss sichergestellt sein, dass insbesondere bei Verwendung eines Standard-Radarmoduls für die Erkennung von Querverkehr die Überwachung des Totwinkelbereichs ausreichend ist. Bei einer Ausführungsform des Verfahrens ist deshalb ein Radarmodul in einen vorderen Stoßfänger als Front-Eck-Radar oder in einen Seitenspiegel integriert, das dazu ausgelegt ist, ein Radarsignal, das von einem im Totwinkelbereich befindlichen Verkehrsobjekt reflektiert wurde, auch dann zu erfassen, falls ein Abstand des Verkehrsobjekts von dem Kraftfahrzeug in einem Bereich von 2,5 Meter bis 10 Meter liegt. Insbesondere sollte dabei ein Verkehrsobjekt in einem Abstand von 3 Metern immer noch mittels des Radarmoduls in dem Totwinkelbereich erfasst werden können.

Zusätzlich oder alternativ dazu sieht eine Ausführungsform vor, dass für die Überwachung insbesondere des Totwinkelbereichs zusätzlich zumindest eine Ultraschallquelle und ein zugehöriger Ultraschallsensor bereitgestellt sind. Die Ultraschallquelle ist dabei dazu ausgelegt, Ultraschall seitlich vom Kraftfahrzeug abzustrahlen. Der zugehörige, also für das Erfassen dieses Ultraschallbereichs vorgesehene Ultraschallsensor ist mit der zweiten Überwachungseinrichtung gekoppelt, also derjenige für die Überwachung des Totwinkelbereichs. Die zweite Überwachungseinrichtung ist dabei zusätzlich dazu ausgelegt,
das Ultraschallsignal des Ultraschallsensors zur Plausibilisierung der Detektion des Verkehrsobjekts im Totwinkelbereich auszuwerten. Hierdurch kann z.B. bei einem Überholmanöver zuverlässiger unterschieden werden, ob ein im Radarsignal erkennbares Fremdfahrzeug auf einer unmittelbaren Nachbarspur oder auf einer übernächsten Fahrspur neben dem Eigenfahrzeug fährt. Mit anderen Worten ist die seitliche Ablage des Fremdfahrzeugs genauer ermittelbar.

Bei dem erfindungsgemäßen Kraftfahrzeug kann der Erfassungsbereich des Radarmoduls entweder fest, also zeitlich unveränderlich, oder auch beispielsweise durch Beamforming verschwenkbar ausgestaltet sein. Das Radarmodul kann also auch einen verschwenkbaren Erfassungsbereich aufweisen, so dass der Totwinkelbereich dann zumindest zeitweise erfasst wird. Auch weitere Parameter des Erfassungsbereichs, beispielsweise die Reichweite des Radarmoduls und eine Abtastrate, können einstellbar ausgestaltet sein. Um einem erfindungsgemäßen Kraftfahrzeug die verfügbaren technischen Ressourcen, also beispielsweise eine Rechenleistung der zentralen Recheneinrichtung, speziell der ersten und der zweiten Überwachungseinrichtung, sowie Erfassungsmöglichkeiten des Radarmoduls flexibel aufteilen zu können, sieht eine Ausführungsform des erfindungsgemäßen Kraftfahrzeugs vor, eine Steuereinrichtung bereitzustellen, welche eine aktuelle Fahrsituation des Kraftfahrzeugs erkennt und in Abhängigkeit von der erkannten Fahrsituation die erste und/oder die zweite Überwachungseinrichtung aktiviert oder deaktiviert. Beispielsweise kann die aktuelle Fahrgeschwindigkeit ermittelt werden und, beispielsweise für den Fall, dass diese oberhalb eines vorbestimmten Grenzwerts liegt, die Überwachung des Querverkehrs deaktiviert werden. Denn insbesondere bei einer Autobahnfahrt ist ohnehin kein Fahrmanöver möglich, für welches eine Überwachung des Querverkehrs nötig wäre. Das Aktivieren und Deaktivieren kann auch fahrzeugseitig abhängig gemacht werden. Beispielsweise kann bei einem Abbiegemanöver zu einer Seite hin ein herannahender Querverkehr erkannt werden, während zur anderen Seite hin der Totwinkelbereich überwacht wird, um beispielsweise nicht versehentlich einem Fahrradfahrer den Weg abzuschneiden.

In Abhängigkeit von dem verwendeten Modell für das Radarmodul kann durch das Verdrehen des Radarmoduls zum Fahrzeugheck hin eine Überwachungslücke im Frontbereich des Kraftfahrzeugs entstehen. Eine Ausführungsform des Kraftfahrzeugs sieht daher vor, mittig in einer Fahrzeugfront, also insbesondere im mittleren Drittel in der Fahrzeugfront, einen Front-Radarsensor bereitzustellen, welcher ebenfalls mit der ersten Überwachungseinrichtung gekoppelt ist. Hierdurch kann die Überwachungslücke vor dem Kraftfahrzeug geschlossen werden. Anders als im Stand der Technik muss hierbei aber kein besonders leistungsfähiges Front-Radarmodul verwendet werden, welches auch für die Erkennung des Querverkehrs geeignet sein müsste. Der Front-Radarsensor muss nämlich lediglich Radarsignale empfangen können, die frontal von vorn auf das Kraftfahrzeug, beispielsweise in einem Winkel zwischen - 20° und +20° bezüglich der Fahrzeuglängsachse auftreffen. Die seitliche Überwachung wird weiterhin durch das beschriebene Radarmodul für die Überwachung des Querverkehrs durchgeführt werden.

Auch in Bezug auf eine Überwachung des Heckbereichs des Kraftfahrzeugs kann gemäß einer Ausführungsform ein mittig in dem Fahrzeugheck, also insbesondere im mittleren Drittel im Fahrzeugheck, angeordnetes Heck-Radarmodul bereitgestellt sein, welches dann mit einer Schutzeinrichtung zum Erkennen eines möglichen Auffahrunfalls und/oder eines schnell herannahenden rückwärtigen Fremdfahrzeugs ausgelegt ist und hierzu ein Signal des Heck-Radarsensors auswertet. Auch dieses Heck-Radarmodul muss keinen besonders großen Leistungsanforderungen genügen, da sein Erfassungsbereich nicht zur Seite des Kraftfahrzeugs hin ausgerichtet werden können muss.

Im Folgenden ist die Erfindung noch einmal anhand von konkreten Ausführungsbeispielen erläutert. Hierzu zeigen:
- Fig. 1: eine schematische Darstellung einer ersten Ausführungsform des erfindungsgemäßen Kraftfahrzeugs in einer ersten Fahrsituation, und
- Fig. 2: eine schematische Darstellung einer zweiten Ausführungsform des erfindungsgemäßen Kraftfahrzeugs in einer zweiten Fahrsituation.

Die Beispiele stellen bevorzugte Ausführungsformen der Erfindung dar. Bei den Ausführungsbeispielen stellen aber die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen jeweils auch durch weitere der bereits beschriebenen Merkmale der Erfindung ergänzbar.

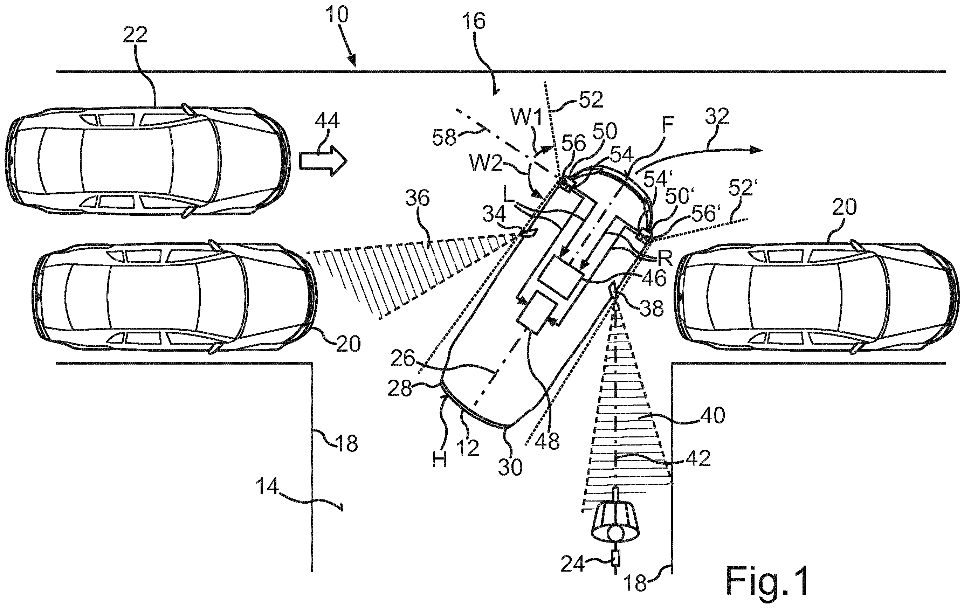

In Fig. 1 ist eine Verkehrssituation 10 gezeigt, in welcher ein Kraftfahrzeug 12 aus einer ersten Straße 14 in eine zweite, quer zur ersten Straße 14 verlaufende Straße 16 abbiegen möchte. Bei dem Kraftfahrzeug 12 handelt es sich um eine Ausführungsform des erfindungsgemäßen Kraftfahrzeugs. Das Kraftfahrzeug 12 kann beispielsweise ein Personenkraftwagen sein. In der Fig. 1 sind des Weiteren gezeigt: zwei Häuserblöcke 18, zwei parkende Fahrzeuge 20, ein die Straße 16 entlangfahrendes Fahrzeug 22 und ein Radfahrer 24. Die Darstellung zeigt eine Vogelperspektive. Das Fahrzeug 22 stellt bezüglich des Kraftfahrzeugs 12 Querverkehr dar.

Für die folgende Erläuterung wird bei dem Kraftfahrzeug 12 eine bezüglich einer geometrischen Fahrzeuglängsachse 26 linke Hälfte als Fahrerseite 28 und eine rechte Hälfte als Beifahrerseite 30 bezeichnet. Das Kraftfahrzeug 12 wird von einem (nicht dargestellten) Fahrer in Vorwärtsfahrtrichtung aus der Straße 14 in die Straße 16 entlang einer Fahrtrajektorie 32 geführt. Ein fahrerseitiger Seitenspiegel 34 weist einen Totwinkelbereich 36 auf, den der Fahrer mittels des Seitenspiegels 34 nicht einsehen kann. Auf der Beifahrerseite 30 weist ein Seitenspiegel 38 einen Totwinkelbereich 40 auf. Der Radfahrer 24 befindet sich in dem Totwinkelbereich 40. Der Radfahrer 24 stellt somit ein Verkehrsobjekt im Totwinkelbereich 40 dar. Der Fahrer des Kraftfahrzeugs 12 kann also während des Abbiegens in der Verkehrssituation 10 den herannahenden Radfahrer 24 nicht erkennen, während sich dieser auf das Kraftfahrzeug 12 zu bewegt, wie in Fig. 1 durch einen Bewegungspfeil 42 veranschaulicht ist.

Bei dem Kraftfahrzeug 12 wird der Fahrer aber dennoch sowohl vor dem Fahrzeug 22, das sich mit einer Fahrgeschwindigkeit 44 auf das Kraftfahrzeug 12 zu bewegt, als auch vor dem herannahenden Fahrradfahrer 24 gewarnt. Es kann auch vorgesehen sein, dass das Kraftfahrzeug 12 selbständig, das heißt ohne ein Zutun des Fahrers, beispielsweise gestoppt wird. Für die Erkennung des Querverkehrs, also des herannahenden Fahrzeugs 22, weist das Kraftfahrzeug 12 eine Überwachungseinrichtung 46 auf, die einen Querverkehrassistenten (FCTA - Front Cross Traffic Assist) für einen Frontbereich des Kraftfahrzeugs 12 bereitstellt, der den Fahrer beim Einfahren in einen Kreuzungsbereich, wie er in Fig. 1 gezeigt ist, unterstützt. Der Radfahrer 24, oder allgemein Verkehrsobjekte in den Totwinkelbereichen 36 und 40, werden durch eine Überwachungseinrichtung 48 erkannt (BSD - Blind Spot Detection).

Beide Überwachungseinrichtungen 46, 48 können beispielsweise ein Programmmodul umfassen, das auf einer zentralen Recheneinheit des Kraftfahrzeugs 12 ausgeführt wird. Für die Fahrerseite 28 und dort die Erkennung sowohl des Querverkehrs als auch die Überwachung des Totwinkelbereichs 36 wird bei dem Kraftfahrzeug 12 ein einziges Sensormodul, nämlich ein Radarmodul 50, verwendet. Ein Erfassungsbereich 52 des Radarmoduls 50 ist derart ausgelegt, dass sowohl die Erkennung des Querverkehrs durch die Überwachungseinrichtung 46 ermöglicht ist als auch der Totwinkelbereich 36 überdeckt ist. Ein Sensorsignal L eines Radarsensors 54 des Radarmoduls 50 wird sowohl an die Überwachungseinrichtung 46 als auch die Überwachungseinrichtung 48 übertragen. Eine Radarquelle 56 des Radarmoduls 50 kann ein Radarsignal aussenden, das bezüglich einer senkrecht zur Fahrzeuglängsachse 26 stehenden Achse 58, also einer Parallelen zur Fahrzeugquerachse, zu einer Fahrzeugfront F hin einen Bereich ausleuchtet, der von der Achse 58 aus zumindest bis zu einem Abstrahlwinkel W1 zur Fahrzeugfront hin reicht, wobei der Abstrahlwinkel in einem Bereich von 20° bis 90°, insbesondere zwischen 45° und 90°, liegen kann. Zu einem Fahrzeugheck H hin wird bevorzugt durch das Radarsignal ein Abstrahlbereich ausgeleuchtet, der von der Achse 58 aus bis zu einem Abstrahlwinkel W2 zum Fahrzeugheck H reicht, wobei der Abstrahlwinkel W2 in einem Bereich von 45° bis 90°, insbesondere 70° bis 90°, liegen kann. Um den Erfassungsbereich 52 derart auszurichten, ist bei dem Kraftfahrzeug 12 das Radarmodul 50 entsprechend zum Fahrzeugheck H des Kraftfahrzeugs 12 hin verdreht eingebaut.

Auf der Beifahrerseite 30 weist das Kraftfahrzeug 12 ein entsprechendes Radarmodul 50' mit derselben Ausgestaltung auf, also mit einer Radarquelle 56' und einem Radarsensor 54'. Es ergibt sich ein Erfassungsbereich 52', der zum Erfassungsbereich 52 bezüglich der Fahrzeuglängsachse 26 spiegelsymmetrisch ausgebildet sein kann. Ein Sensorsignal R des Radarsensors 54' wird ebenfalls sowohl an die Überwachungseinrichtung 46 als auch die Überwachungseinrichtung 48 übertragen. Eine Reichweite der Radarmodule 50, 50' kann gemäß der Erfindung insbesondere eine mittlere Reichweite umfassen, also z.B. bis zu 100 Meter betragen.

Die Überwachungseinrichtung 46 kann auf Grundlage der Radarsignale L, R und auf der Grundlage eines Algorithmus, der aus dem Stand der Technik entnommen werden kann, Querverkehr erkennen und signalisieren. Die Überwachungseinrichtung 48 kann auf Grundlage des Signals L ein Verkehrsobjekt in dem Totwinkelbereich 36 der Fahrerseite 28 und auf Grundlage des Sensorsignals R in dem Totwinkelbereich 40 der Beifahrerseite 30 ein Verkehrsobjekt detektieren und entsprechend signalisieren. Auch hierzu ist ein Algorithmus verwendbar, wie er an sich aus dem Stand der Technik bekannt ist.

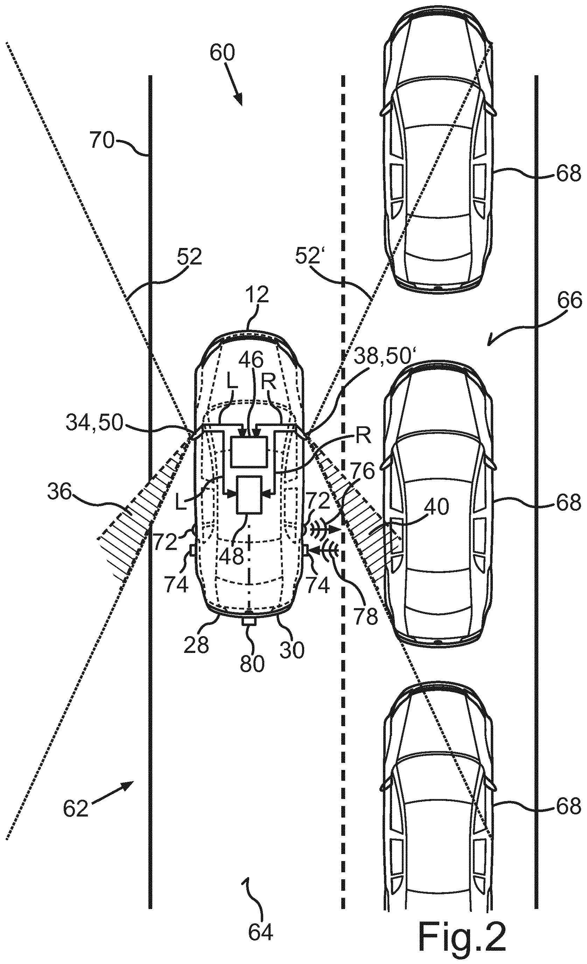

In Fig. 2 ist eine weitere Verkehrssituation 60 gezeigt. Zur besseren Orientierung sind in Fig. 2 Elemente, welche in ihrer Funktionsweise Elementen entsprechen, die in Fig. 1 gezeigt sind, mit denselben Bezugszeichen wie in Fig. 1 versehen. Für die Erläuterung der Funktionsweise der Elemente sei auf die Ausführungen zu Fig. 1 verwiesen.

In der Fahrsituation 60 fährt ein Kraftfahrzeug 12 auf einer Schnellstraße 62, beispielsweise einer Autobahn. Das Kraftfahrzeug 12 stellt eine weitere Ausführungsform des erfindungsgemäßen Kraftfahrzeugs dar. Das Kraftfahrzeug 12 fährt in dem gezeigten Beispiel auf einer Überholspur 64 und überholt auf einer Nachbarspur 66 fahrende Fahrzeuge 68.

Auf einer Fahrerseite des Kraftfahrzeugs 12 kann sich an einem Rand der Überholspur 64 eine Fahrbahnbegrenzung oder Randbebauung 70 befinden, also beispielsweise eine Leitplanke. Das Kraftfahrzeug 12 weist ebenfalls eine Überwachungseinrichtung 46 für Querverkehr und eine weitere Überwachungseinrichtung 48 zur Überwachung von Totwinkelbereichen 36, 40 von Seitenspiegeln 34, 38 des Kraftfahrzeugs 12 auf.

Bei dem Kraftfahrzeug 12 sind in einem Bereich der Seitenspiegel 34, 38 jeweils ein Radarmodul 50, 50' integriert. Das Radarmodul 50 auf der Fahrerseite 48 weist einen Erfassungsbereich 52 auf, welcher derart ausgerichtet ist, dass ein Signal L des Radarsensors des Radarmoduls 50 sowohl von der Überwachungseinrichtung 46 als auch der Überwachungseinrichtung 48 für die jeweilige Erkennung zugrunde gelegt wird. Ein Rand des Erfassungsbereichs kann, wie in Fig. 2 dargestellt, wegen des Verbauorts im Seitenspiegel 34 mit einem Rand des Totwinkelbereichs 36 zusammenfallen.

Entsprechend ist auch ein Erfassungsbereich 52' des Radarmoduls 50' derart ausgerichtet, dass ein Sensorsignal R von beiden Überwachungseinrichtungen 46, 48 genutzt wird. Das Kraftfahrzeug 12 kann des Weiteren eine Ultraschallquelle 72 sowohl auf der Fahrerseite 28 als auch auf der Beifahrerseite 30 aufweisen. Zu jeder Ultraschallquelle 72 gehört ein Ultraschallempfänger 74 zum Empfangen des jeweiligen von der Ultraschallquelle 72 ausgestrahlten Ultraschalls. In Fig. 2 ist beispielhaft gezeigt, wie die beifahrerseitige Ultraschallquelle 72 einen Ultraschall 76 in Richtung zur den parallel zum Kraftfahrzeug 12 mit nahezu derselben Geschwindigkeit fahrenden Fahrzeugen 68, also den "mitschwimmenden" Fahrzeugen 68, ausstrahlt und der ausgestrahlte Ultraschall 76 von einem der Fahrzeuge 68 reflektiert und als reflektierter Ultraschall 78 wieder vom zugehörigen, beifahrerseitigen Ultraschallempfänger 74 empfangen wird. Die Ultraschallquelle 72 und der Ultraschallempfänger 74 können auch in bekannter Weise durch ein einziges Bauteil bereitgestellt sein. Anhand des empfangenen Ultraschalls 78 kann durch die Überwachungseinrichtung 48 verifiziert werden, ob ein anhand das Radarsignal R erkanntes Verkehrsobjekt sich auch derart nahe an dem Kraftfahrzeug 12 befindet, dass es sich auch tatsächlich in dem Totwinkelbereich 40 befindet und damit ein Verkehrsobjekt im Totwinkelbereich 40 zu signalisieren ist.

Durch die Beispiele ist gezeigt, wie durch die vorgeschlagene Verdrehung von Frontsensoren 50, 50' neben den Frontfunktionen, also insbesondere der Erkennung von Querverkehr im Frontbereich, auch eine Überwachung des Totwinkelbereichs 36, 40 der Fahrerseite 38 und der Beifahrerseite 30 möglich ist, ohne hierbei dedizierte, seitliche Hecksensoren zu benötigen, wie dies im Stand der Technik der Fall ist. Optimal wird der Sichtbereich durch einen zentralen Hecksensor 80 oder durch Ultraschallsensoren 74 erweitert. Wie in Fig. 2 gezeigt ist, können durch die Sensoren der Radarmodule 50, 50' Fahrzeuge im Nahbereich insbesondere auch auf der kompletten Nachbarspur 66 erkannt werden, das heißt eine Erkennung von Fahrzeugen 68 insbesondere im Blind Spot, also dem Totwinkelbereich 40, beim Überholen ist möglich. Bevorzugt ist hierbei der zugehörige Erfassungsbereich 52, 52' jedes Radarmoduls 50, 50' derart weitreichend ausgelegt, dass im Totwinkelbereich 36, 40 auch Fahrzeuge drei Meter hinter dem Kraftfahrzeug 12 erkannt werden.

Für eine weitere Performancesteigerung können folgende Maßnahmen umgesetzt werden: Verwendung von zusätzlichen Ultraschallsensoren 74 zur weiteren Absicherung des Seitenbereichs. Hiermit kann eine Erkennung von seitlichen Fahrzeugen 68 abgesichert werden und führt so zu einer robusteren Funktion. Auch die Verwendung von einem zusätzlichen Heckradar 80 ist möglich. Hiermit können auch schnelle, sich von hinten annähernde Fahrzeuge rechtzeitig erkannt werden.

## Patentansprüche

1. Kraftfahrzeug (12) mit
- einem ersten Radarmodul (50), welches seitlich auf einer Fahrerseite im Kraftfahrzeug (12) in einem äußeren Ende eines vorderen Stoßfängers des Kraftfahrzeugs (12) integriert ist und dessen Erfassungsbereich (52) in Richtung zu einem möglichen fahrerseitigen Querverkehr (22) hin ausgerichtet ist,
- einem zweiten Radarmodul (50'), welches seitlich auf einer Beifahrerseite im Kraftfahrzeug (12) in einem äußeren Ende eines vorderen Stoßfängers des Kraftfahrzeugs (12) integriert ist und dessen Erfassungsbereich (52') in Richtung zu einem möglichen beifahrerseitigen Querverkehr hin ausgerichtet ist,
- einer ersten Überwachungseinrichtung (46), die mit einem ersten Radarsensor (54) des ersten Radarmoduls (50) und mit einem ersten Radarsensor (54') des zweiten Radarmoduls (50') gekoppelt und dazu ausgelegt ist,
- auf der Grundlage eines Signals (L) des ersten Radarsensors (54) des ersten Radarmoduls (50) herannahenden fahrerseitigen Querverkehr (22) zu erkennen, und
- auf der Grundlage eines Signals (R) des ersten Radarsensors (54') des zweiten Radarmoduls (50') herannahenden beifahrerseitigen Querverkehr zu erkennen,
- einer zweiten Überwachungseinrichtung (48), die dazu ausgelegt ist zu detektieren, ob sich in einem fahrerseitigen Totwinkelbereich (36) oder beifahrerseitigen Totwinkelbereich (40), welche für den Fahrer mittels eines jeweiligen Seitenspiegels (34, 38) des Kraftfahrzeugs (12) uneinsehbar sind, ein Verkehrsobjekt befindet, wobei die zweite Überwachungseinrichtung (48) ebenfalls mit dem ersten Radarsensor (54) des ersten Radarmoduls (50) und mit dem ersten Radarsensor (54') des zweiten Radarmoduls (50') gekoppelt ist und dazu ausgelegt ist, das Verkehrsobjekt in dem jeweiligen Totwinkelbereich (36, 40) auf der Grundlage des jeweiligen Signals (L, R) zu detektieren, wobei das erste und zweite Radarmodul (50, 50') hierzu derart zu einem Fahrzeugheck (H) des Kraftfahrzeugs (12) hin verdreht angeordnet sind, dass ihre Erfassungsbereiche (52, 52') den jeweiligen Totwinkelbereich (36, 40) mit umfassen.

2. Kraftfahrzeug (12) nach Anspruch 1, wobei die Radarsensoren (54, 54') von einer äußeren Fahrzeugumgebung durch eine metallfreie Abdeckung abgeschirmt sind.

3. Kraftfahrzeug (12) nach einem der vorhergehenden Ansprüche, wobei das erste und das zweite Radarmodul (50, 50') dazu ausgelegt sind, ein von dem im jeweiligen Totwinkelbereich (36, 40) befindlichen Verkehrsobjekt (22) reflektiertes Radarsignal auch dann zu erfassen, falls ein Abstand des Verkehrsobjekts (22) von dem Kraftfahrzeug (12) in einem Bereich von 2,5m bis 10m liegt, insbesondere falls der Abstand 3m beträgt.

4. Kraftfahrzeug (12) nach einem der vorhergehenden Ansprüche, wobei zumindest eine Ultraschallquelle (72) und ein zugehöriger Ultraschallsensor (74) bereitgestellt sind, wobei die Ultraschallquelle (72) dazu ausgelegt ist, Ultraschall (76) seitlich vom Kraftfahrzeug (12) abzustrahlen, und wobei der Ultraschallsensor (74) mit der zweiten Überwachungseinrichtung (48) gekoppelt ist und die zweite Überwachungseinrichtung (48) dazu ausgelegt ist, ein Ultraschallsignal des Ultraschallsensors (74) zur Plausibilisierung der Detektion des Verkehrsobjekts (24) im jeweiligen Totwinkelbereich (36, 40) auszuwerten.

5. Kraftfahrzeug (12) nach einem der vorhergehenden Ansprüche, wobei eine Steuereinrichtung dazu ausgelegt ist, eine aktuelle Fahrsituation (10, 60) zu erkennen und in Abhängigkeit von der erkannten Fahrsituation (10, 60) die erste und/oder die zweite Überwachungseinrichtung (46, 48) zu aktivieren oder zu deaktivieren.

6. Kraftfahrzeug (12) nach einem der vorhergehenden Ansprüche, wobei mittig in einer Fahrzeugfront ein Front-Radarmodul angeordnet ist, wobei ein Radarsensor des Front-Radarmoduls ebenfalls mit der ersten Überwachungseinrichtung (46) gekoppelt ist.

7. Kraftfahrzeug (12) nach einem der vorhergehenden Ansprüche, wobei mittig in dem Fahrzeugheck (H) ein Heck-Radarmodul (80) angeordnet ist und eine Schutzeinrichtung zum Erkennen eines möglichen Auffahrunfalls und/oder eines rückwärtigen Fremdfahrzeugs ein Signal des Heck-Radarsensors (80) auszuwerten ausgelegt ist.

8. Verfahren zum Detektieren zumindest eines anderen Verkehrsteilnehmers (22, 24), der sich seitlich eines Kraftfahrzeugs (12) befindet, wobei durch ein eine Radarquelle (56, 56') und einen Radarsensor (54, 54') umfassendes erstes fahrerseitiges und zweites beifahrerseitiges Radarmodul (50, 50'), welche jeweils seitlich im Kraftfahrzeug (12) in einem äußeren Ende eines vorderen Stoßfängers des Kraftfahrzeugs (12) integriert sind, ein jeweiliges Radarsignal (L,R) in einen ersten Bereich (52, 52') zu einem möglichen Querverkehr (22) hin abgestrahlt und das jeweilige Radarsignal (L, R), falls es vom Querverkehr (22) reflektiert wird, durch den Radarsensor (54, 54') des ersten bzw. zweiten Radarmoduls (50, 50') des Kraftfahrzeugs (12) empfangen und das empfangene Radarsignal (L, R) durch eine erste Überwachungseinrichtung (46) des Kraftfahrzeugs (12) bezüglich herannahenden Querverkehrs (22) ausgewertet wird,
wobei
durch die Radarquelle (56, 56') das jeweilige Radarsignal (L, R) in einen jeweiligen Totwinkelbereich (36, 40) des Kraftfahrzeugs (12) abgestrahlt und durch den jeweiligen Radarsensor (54, 54') des ersten bzw. zweiten Radarmoduls (50, 50') das jeweilige Radarsignal (L, R), auch falls es von einem Verkehrsobjekt (24) im jeweiligen Totwinkelbereich (36, 40) reflektiert wird, empfangen wird und der jeweilige Totwinkelbereich (36, 40) durch eine zweite Überwachungseinrichtung (48) des Kraftfahrzeugs (12) auf Grundlage des jeweiligen Radarsignals (L, R) überwacht wird.

## Claims

1. A motor vehicle (12) having
- a first radar module (50), which integrated laterally on a driver's side in the motor vehicle (12) in an external end of a front bumper of the motor vehicle (12) and the detection region of which is oriented in the direction towards a possible driver-side cross-traffic (22),
- a second radar module (50'), which is integrated laterally on a passenger side in the motor vehicle (12) in an external end of the front bumper of the motor vehicle (12) and the detection region of which (52') is oriented in the direction towards a possible passenger-side cross-traffic,
- a first monitoring device (46), which is coupled with a first radar sensor (54) of the first radar module (50) and with a first radar sensor (54') of the second radar module (50') and is configured
- to detect approaching driver-side cross traffic (22) on the basis of a signal (L) of the first radar sensor (54) of the first radar module (50), and
- to detect approaching passenger-side cross-traffic on the basis of a signal (R) of the first radar sensor (54') of the second radar module (50'),
- a second monitoring device (48), which is configured to detect whether a traffic object is located in a driver-side blind spot region (36) or passenger-side blind spot region (40), which cannot be seen by the driver by means of a respective side mirror (34, 38) of the motor vehicle (12), wherein the second monitoring device (48) is also coupled with the first radar sensor (54) of the first radar module (50) and with the first radar sensor (54') of the second radar module (50') and is configured to detect the traffic object in the respective blind spot region (36, 40) on the basis of the respective signal (L, R), wherein the first and second radar module (50, 50') are arranged so as to be rotated toward the vehicle rear end (H) of the motor vehicle (12) in such a manner that their detection regions (52, 52') include the respective blind spot region (36, 40).

2. The motor vehicle (12) according to Claim 1, wherein the radar sensors (54, 54') are shielded from an external vehicle environment by a metal-free cover.

3. The motor vehicle (12) according to any one of the preceding claims, wherein the first and the second radar module (50, 50') are configured to detect a radar signal reflected by the traffic object (22) located in the respective blind spot region (36, 40) even if a distance of the traffic object (22) from the motor vehicle (12) is in a range of 2.5 m to 10 m, in particular if the distance is 3 m.

4. The motor vehicle (12) according to any one of the preceding claims, wherein at least one ultrasound source (72) and an associated ultrasound sensor (74) are provided, wherein the ultrasound source (72) is configured to emit ultrasound (76) laterally from the motor vehicle (12), and wherein the ultrasound sensor (74) is coupled with the second monitoring device (48) and the second monitoring device (48) is configured to evaluate the ultrasound signal of the ultrasound sensor (74) for plausibility checking of the detection of the traffic object (24) in the respective blind spot region (36, 40).

5. The motor vehicle (12) according to any one of the preceding claims, wherein a control device is configured to detect a current driving situation (10, 60) and depending on the detected driving situation (10, 60) to activate or to deactivate the first and/or the second monitoring device (46, 48).

6. The motor vehicle (12) according to any one of the preceding claims, wherein a front radar module is arranged centrally in a front of the vehicle, wherein a radar sensor of the front radar module is also coupled with the first monitoring device (46).

7. The motor vehicle (12) according to any one of the preceding claims, wherein a rear-end radar module (80) is arranged centrally in the vehicle rear end (H) and a protective device for detecting a possible rear-end collision accident and/or a rear third-party vehicle is configured to evaluate a signal of the rear-end radar sensor (80).

8. A method for detecting at least one other road user (22, 24), which is located on the side of a motor vehicle (12), wherein by means of a first driver-side and second passenger-side radar module (50, 50') comprising a radar source (56, 56') and a radar sensor (54, 54'), which are each integrated laterally in the motor vehicle (12) in an external end of a front bumper of the motor vehicle (12), a respective radar signal (L, R) is emitted into a first region (52, 52') towards a possible cross-traffic (22) and the respective radar signal (L, R), if it is reflected by the cross-traffic (22), is received by the radar sensor (54, 54') of the first or second radar module (50, 50') of the motor vehicle (12) and the received radar signal (L, R) is evaluated by means of a first monitoring device (46) of the motor vehicle (12) with regard to approaching cross-traffic (22),
wherein
by means of the radar source (56, 56') the respective radar signal (L, R) is emitted into a respective blind spot region (36, 40) of the motor vehicle (12) and by means of the respective radar sensor (54, 54') of the first or second radar module (50, 50') the respective radar signal (L, R), even if it is reflected by a traffic object (24) in the respective blind spot region (36, 40), is received and the respective blind spot region (36, 40) is monitored by means of a second monitoring device (48) of the motor vehicle (12) on the basis of the respective radar signal (L, R).

## Revendications

1. Véhicule automobile (12) avec
- un premier module de radar (50) qui est intégré latéralement du côté conducteur dans le véhicule automobile (12) dans une extrémité externe d'un pare-chocs avant du véhicule automobile (12) et dont la zone de détection (52) est orientée en direction d'une éventuelle circulation transversale côté conducteur (22),
- un deuxième module radar (50') qui est intégré latéralement du côté passager avant dans le véhicule automobile (12) dans une extrémité externe d'un pare-chocs avant du véhicule automobile (12) et dont la zone de détection (52') est orientée en direction d'une éventuelle circulation transversale côté passager avant,
- un premier dispositif de surveillance (46) qui est couplé avec un premier capteur radar (54) du premier module radar (50) et avec un premier capteur radar (54') du deuxième module radar (50') et conçu
- pour détecter, sur la base d'un signal (L) du premier capteur radar (54) du premier module radar (50), une circulation transversale côté conducteur (22) en approche et
- pour détecter, sur la base d'un signal (R) du premier capteur radar (54') du deuxième module radar (50'), une circulation transversale côté passager avant en approche
- un deuxième dispositif de surveillance (48), qui est conçu pour détecter si, dans une zone d'angle mort côté conducteur (36) ou dans une zone d'angle mort côté passager avant (40), qui sont invisibles pour le conducteur au moyen d'un rétroviseur latéral (34, 38) du véhicule automobile (12), se trouve un objet en circulation, le deuxième dispositif de surveillance (48) étant également couplé avec le premier capteur radar (54) du premier module radar (50) et avec le premier capteur radar (54') du deuxième module radar (50') et conçu pour détecter l'objet en circulation dans la zone d'angle mort (36, 40) correspondante sur la base du signal (L, R) correspondant, les premier et deuxième modules radar (50, 50') étant pour cela disposée de manière tournée par rapport à l'arrière (H) du véhicule automobile (12) de façon à ce que leurs zones de détection (52, 52') comprennent la zone d'angle mort (36, 40) correspondante.

2. Véhicule automobile (12) selon la revendication 1, les capteurs radar (54, 54') étant protégés d'un environnement extérieur du véhicule par une protection non métallique.

3. Véhicule automobile (12) selon l'une des revendications précédentes, les premier et deuxième modules radar (50, 50') étant conçus pour détecter un signal radar réfléchi par l'objet en circulation (22) se trouvant dans la zone d'angle mort (36, 40) correspondante même si une distance entre l'objet en circulation (22) et le véhicule automobile (12) est dans un intervalle de 2,5 m à 10 m, plus particulièrement si la distance est de 3 m.

4. Véhicule automobile (12) selon l'une des revendications précédentes, au moins une source d'ultrasons (72) et un capteur d'ultrasons (74) correspondant étant mis à disposition, la source d'ultrasons (72) étant conçue pour émettre des ultrasons (76) latéralement à partir du véhicule automobile (12) et le capteur d'ultrasons (74) étant couplé avec le deuxième dispositif de surveillance (48) et le deuxième dispositif de surveillance (48) étant conçu pour analyser un signal ultrasonore du capteur d'ultrasons (74) afin de déterminer la plausibilité de la détection de l'objet en circulation (24) dans la zone d'angle mort (36, 40) correspondante.

5. Véhicule automobile (12) selon l'une des revendications précédentes, un dispositif de commande étant conçu pour détecter une situation de conduite actuelle (10, 60) et, en fonction de la situation de conduite (10, 60) détecté, pour activer ou pour désactiver le premier et/ou le deuxième dispositif de surveillance (46, 48).

6. Véhicule automobile (12) selon l'une des revendications précédentes, un module radar frontal étant disposé au centre à l'avant du véhicule, un capteur radar du module radar frontal étant également couplé avec le premier dispositif de surveillance (46).

7. Véhicule automobile (12) selon l'une des revendications précédentes, un module radar arrière (80) étant disposé au centre à l'arrière du véhicule (H) et un dispositif de protection est conçue pour analyser un signal du capteur radar arrière (80), pour la détection d'une éventuelle collision et/ou d'un véhicule extérieur à l'arrière.

8. Procédé de détection d'au moins un autre usager de la route (22, 24), qui se trouve sur le côté d'un véhicule (12), moyennant quoi, à l'aide d'un premier module radar côté conducteur (54, 54') et d'un deuxième module radar côté passager avant (50, 50'), qui sont intégrés chacun latéralement dans le véhicule automobile (12) dans une extrémité externe d'un pare-chocs avant du véhicule automobile (12), un signal radar (L, R) correspondante est émis dans une première zone (52, 52') en direction d'une éventuelle circulation transversale (22) et le signal radar (L, R) correspondant, s'il est réfléchi par la circulation transversale (22), est reçu par le capteur radar (54, 54') du premier ou du deuxième module radar (50, 50') du véhicule automobile (12) et le signal radar (L, R) reçu est analysé par un premier dispositif de surveillance (46) du véhicule automobile (12) en ce qui concerne la circulation transversale en approche (22),
la source radar (56, 56') émettant le signal radar (L, R) vers une zone d'angle mort (36, 40) correspondante du véhicule automobile (12) et le capteur radar (54, 54') correspondant du premier ou du deuxième module radar (50, 50') recevant le signal radar (L, R) correspondant même s'il est réfléchi par un objet en circulation (24) dans la zone d'angle mort (36, 40) correspondante, et la zone d'angle mort (36, 40) correspondante est surveillée par un dispositif de surveillance (48) du véhicule automobile (12) sur la base du signal radar (L, R) correspondant.
